# FASCICULE DE BREVET EUROPEEN

(11) **EP 4 773 091 B1**
(45) Date de publication et mention de la délivrance du brevet: **18.11.2026**
(21) Numéro de dépôt: 25214317.7
(22) Date de dépôt: 07.11.2025
(51) Int. Cl.: G06V 10/24, G06V 40/16

(54) **PROCÉDÉ D ALIGNEMENT DU VISAGE D'UNE PERSONNE DANS UNE IMAGE**
VERFAHREN ZUR AUSRICHTUNG DES GESICHTES EINER PERSON IN EINEM BILD
METHOD FOR ALIGNING A PERSON'S FACE IN AN IMAGE

(30) Priorité: 03.01.2025 FR 2500028
(43) Date de publication de la demande: 08.07.2026
(73) Titulaire: Idemia Public Security France, 92400 Courbevoie (FR)
(72) Inventeur: D'YVOIRE, François, 92400 Courbevoie (FR); MONET, Damien, 92400 Courbevoie (FR)
(74) Mandataire: IPS

(56) Documents cités:
- US-A1- 2009 060 290
- US-A1- 2023 102 702

## Description

### Domaine technique

La présente invention concerne un procédé, mis en œuvre par un dispositif de traitement de données, d'alignement du visage d'un individu dans une image.

### Arrière-plan technique

Il est courant de recourir à des protocoles d'identification (1:N) et/ou d'authentification (1:1) des individus fondés sur la comparaison de certaines caractéristiques biométriques de leur visage afin de leur permettre d'accéder à des services à distance, autoriser un accès à des informations stockées dans une base collective ou personnelle de données, vérifier une identité, lors par exemple un passage aux frontières, ou encore autoriser un accès à une zone d'accès restreint.

Que ce soit lors d'une authentification ou lors d'une identification, la comparaison des caractéristiques biométriques n'est généralement pas mise en œuvre sur les données brutes directement issues de leur enregistrement mais sur des données biométriques dérivées par suite de l'application d'un traitement algorithmique appelé encodage. Selon la section 3.21 de la norme ISO/IEC 19794-1:2011 Information technology - Biometric data interchange formats - Part 1: Framework, les données biométriques dérivées constituent un « gabarit biométrique » ou « modèle biométrique » qui est distinct des données brutes dont il est issu et peut être comparé à d'autres gabarits biométriques.

Lorsque l'identification ou l'authentification biométrique repose sur une reconnaissance faciale, les données biométriques acquises se présent sous la forme d'une ou plusieurs images ou photographies du visage de ou des personnes à identifier ou authentifier.

La capacité d'un traitement d'encodage à générer un gabarit biométrique fiable à partir de l'image d'un visage dépend de l'orientation, appelée « pose », du visage par rapport au dispositif d'acquisition qui en acquiert une ou plusieurs images, et de son expression faciale. En général, le traitement d'encodage requiert que le visage soit dans un état d'alignement approprié pour la génération d'un gabarit biométrique. Or, lors de l'acquisition de leur image, les visages des personnes ont rarement, par rapport au dispositif d'acquisition, une orientation, notamment de face et centrée, qui permet l'obtention d'images directement exploitables pour la génération de gabarit biométrique. C'est la raison pour laquelle, les traitements d'encodage comprennent une opération préalable d'alignement. Ainsi, les traitements d'encodage pour la reconnaissance faciale à partir d'une image reposent sur trois opérations successives : la détection du visage, l'alignement du visage, et la représentation du visage sous la forme d'un gabarit biométrique, typiquement un vecteur des caractéristiques du visage. Une revue des méthodes d'encodage pour la reconnaissance faciale comprenant ces trois opérations est fournie par Du, H., et al. (2022). The elements of end-to-end deep face recognition: A survey of recent advances. ACM Computing Surveys (CSUR), 54(10s), 1-42.

La plupart des méthodes d'alignement mettent en œuvre une transformation géométrique du visage de manière que certains de points de repère (« landmarks » ou « keypoints ») du visage tels que les yeux, le nez et/ou la bouche, correspondant à des points de référence d'une forme canonique ou d'un prototype. Cette transformation géométrique peut être une régression sur la position des points de référence ou une carte thermique (« heatmap ») du visage, ou encore une modélisation d'une forme tridimensionnelle du visage à partir de la forme bidimensionnelle du visage représentée dans l'image.

EP 2 031 544 A1 SONY CORP [JP] 04.03.2009 décrit une méthode de traitement d'une image d'un visage comprenant une étape de correction de la position de points de repère du visage, notamment la correction des angles de lacet et de roulis du visage sur la base de valeurs estimés lors d'une étape préalable d'estimation de l'orientation du visgae.

Chai, X., et al. (2003). Pose normalization for robust face recognition based on statistical affine transformation. In Fourth International Conference on Information, Communications and Signal Processing, 2003 and the Fourth Pacific Rim Conference on Multimedia. Proceedings of the 2003 Joint (Vol. 3, pp. 1413-1417). IEEE décrit une méthode d'alignement dans laquelle l'image du visage est divisée en trois régions rectangulaires dont les paramètres géométriques sont ensuite modifiés par application d'un transformation affine de manière à transformer l'orientation spécifique du visage dans l'image en une orientation en vue de face.

Tuzel, O. et al. (2016). Robust face alignment using a mixture of invariant experts. In Computer Vision-ECCV 2016: 14th European Conference, Amsterdam, The Netherlands, October 11-14, 2016, Proceedings, Part V 14 (pp. 825-841). Springer International Publishing décrit, par exemple, une méthode d'alignement comprenant une alternance de plusieurs transformations affines et de plusieurs fonctions de régression. Les paramètres des transformations affines font l'objet d'une optimisation sur des ensembles réduits d'images d'entrainements afin de transformer des points de repère estimés sur les visages par les fonctions de régression vers les points de référence d'un prototype de visage. Les fonctions de régression sont des fonctions de régression par descente de gradient spécialisées pour estimer des points de référence sur des orientations et des expressions particulières des visages.

L'état de la technique comprend également US 2023/102702 A1 et US 2009/060290 A1.

### Résumé de l'invention

Les méthodes actuelles d'alignement d'un visage au sein d'une image ont pour objectif de détermine la position de de points de repère (« landmarks » ou « keypoints ») du visage tels que les yeux, le nez et/ou la bouche, puis d'opérer une transformation du visage afin que ces points de repère correspondent aux points de référence d'une forme canonique ou d'un prototype de visage. Or, il a été constaté qu'un algorithme d'encodage est d'autant moins performant, en termes de précision et fiabilité des gabarits biométriques qu'il génère à partir d'une image, que la position des points de repère, dans l'image, varie même lorsqu'une correspondance entre ces points de repère et les points de référence d'un prototype est préalablement obtenu. En particulier, les capacités d'un tel algorithme d'encodage à comparer avec précision, lors de son apprentissage, les différentes orientations d'un visage sont négativement affectées, et ses performances lors d'une opération ultérieure d'encodage, après son entraînement, peuvent se dégrader.

Un premier aspect de l'invention concerne un procédé, mis en œuvre par un dispositif de traitement de données, d'alignement d'un visage d'un individu dans une image, le procédé comprend les étapes suivantes :
(a) Détecter, dans une image du visage d'un individu, les positions d'un œil gauche, d'un œil droit, d'un point médian entre l'œil droit et l'œil gauche, et d'un point médian de la bouche ;
(b) Appliquer une première transformation géométrique de sorte que les positions du point médian entre l'œil gauche et l'œil droit et du point médian de la bouche coïncident avec des points de référence ;
(c) Appliquer une deuxième transformation géométrique de sorte que la position de l'œil le plus proche dans la profondeur de l'image coïncide avec la position d'une ligne verticale de référence.

Selon certains modes de réalisation, la première transformation géométrique est une transformation affine.

Selon certains modes de réalisation, la deuxième transformation géométrique est une translation dont la norme est proportionnelle à l'angle de lacet.

Selon certains modes de réalisation, les paramètres de la première transformation géométrique et/ou de la deuxième transformation géométrique sont ajustés lors d'une étape préalable d'apprentissage selon une méthode de régression sur un ensemble d'images d'entraînement comprenant des images de visages selon différentes orientations.

Selon certains modes de réalisation, la ligne verticale de référence est située à une distance d'une ligne médiane de l'image comprise entre zéro et un tiers de la largeur de l'image.

Selon certains modes de réalisation, l'œil le plus proche peut être déterminé à partir d'une estimation de l'angle γ de lacet ou d'une comparaison de la position du nez avec celle d'une ligne entre un point médian de la bouche et un point médian entre l'œil gauche et l'œil droit.

Un deuxième aspect de l'invention concerne un dispositif de traitement de données comprenant des moyens pour la mise en œuvre d'un procédé selon l'un des quelconques modes de réalisation du premier aspect de l'invention.

Un troisième aspect de l'invention concerne un programme d'ordinateur comprenant des instructions qui, lorsque le programme est exécuté par un dispositif de traitement de données, conduisent celui-ci à mettre en œuvre un procédé selon l'un des quelconques modes de réalisation du premier aspect de l'invention.

Un quatrième aspect de l'invention concerne un procédé d'encodage d'une image d'un visage d'un individu, le procédé comprend les étapes suivantes :
- Acquérir une image du visage d'un individu ;
- Aligner le visage de l'individu à l'aide d'un procédé d'alignement selon l'un des quelconques modes de réalisation du premier aspect de l'invention ;
- Encoder l'image du visage aligné en un gabarit biométrique à l'aide d'un schéma d'encodage.

Un cinquième aspect de l'invention concerne un terminal d'identification par reconnaissance faciale comprenant :
- un dispositif d'acquisition d'une image du visage d'un individu ;
- un dispositif de traitement de données selon deuxième aspect de l'invention.

### Brève description des dessins

**Fig. 1** est une représentation schématique d'une zone de contrôle d'accès comprenant un terminal d'identification biométrique et un système de portes.
**Fig. 2** est une représentation schématique d'un exemple de terminal d'identification biométrique.
**Fig. 3** est une représentation schématique des angles de lacet, de tangage et de roulis d'une tête humaine.
**Fig. 4** est une représentation schématique d'un visage selon différentes orientations, notamment différents angles de lacet.
**Fig. 5** est une représentation schématique de points de repère estimés sur un visage en vue de face.
**Fig. 6** est une représentation schématique de points de repère estimés sur un visage en vue de profil.
**Fig. 7** est un ordinogramme d'un procédé d'alignement selon le premier aspect de l'invention.
**Fig. 8** est une représentation schématique du résultat d'une première transformation géométrique appliquée sur un visage selon un mode de réalisation de l'invention.
**Fig. 9** est une représentation schématique du résultat d'une deuxième transformation géométrique appliquée sur un visage selon un mode de réalisation de l'invention.

### Description détaillée des modes de réalisation

Dans le cadre de la présente divulgation, les modes de réalisation sont décrits dans le contexte général d'un ou plusieurs matériels ou dispositifs capables d'exécuter des instructions préchargées telles que, par exemple, des instructions exécutables par ordinateur pour l'exécution de modules de programme. Les modules de programme peuvent comprendre une ou plusieurs routines, programmes, objets, variables, commandes, scripts, fonctions, applications, composants, structures de données qui peuvent exécuter des tâches particulières ou mettre en œuvre des types particuliers de données abstraites.

Certains modes de réalisation peuvent également être mis en œuvre dans des environnements informatiques distribués où les tâches sont exécutées par des dispositifs distants de traitement de données qui sont reliés par un réseau de communication. Dans un environnement informatique distribué, les modules de programme peuvent se trouver sur des supports de stockage informatique locaux et/ou distants, y compris des dispositifs de stockage mémoire.

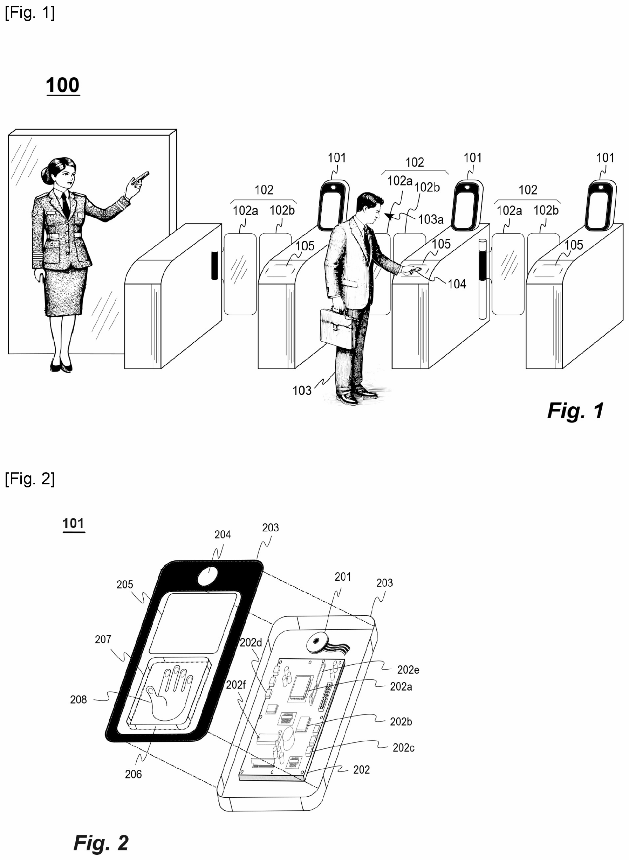

En référence à la **Fig. 1****,** dans un exemple purement illustratif, une zone **100** de contrôle d'accès à un site, un évènement ou un territoire peut comprendre un terminal **101** d'identification biométrique par reconnaissance faciale et un système **102** de portes **102a, 102b** d'accès dont l'ouverture ou la fermeture, à un individu **103,** est conditionnée par l'échec ou la réussite d'une identification biométrique dudit individu **103** par ledit système **101** d'identification biométrique.

Lorsqu'un individu **101** souhaite accéder au site, à l'évènement ou au territoire, il doit d'abord s'identifier auprès du terminal **101** d'identification biométrique en soumettant une requête en identification auprès dudit terminal **101.** Selon l'exemple, représenté sur la **Fig. 1****,** la requête peut être soumise par l'intermédiaire d'un terminal mobile **104,** tel qu'un téléphone mobile multifonction, sur lequel sont enregistrés des données d'identité, telles qu'un identifiant, un passeport, et/ou un ticket électronique. Le terminal **101** d'identification biométrique peut alors communiquer avec un lecteur **105** sans contact adapté à la lecture d'une mémoire non-transitoire ou d'un élément sécurisé du terminal **104** mobile afin d'accéder aux données d'identité et/ou au ticket électronique qui y sont stockés. Selon un autre exemple équivalent, la requête peut être soumise par apposition d'un ticket physique ou d'une carte à puce sur le lecteur **105** du terminal **101** d'identification biométrique. Le lecteur **105** peut être un lecteur sans contact adapté à la lecture d'une mémoire non-transitoire ou d'un élément sécurisé contenu dans la carte à puce ou le ticket physique, et/ou un lecteur optique adapté à la lecture d'un code, tel qu'un QR code, affiché sur le ticket.

Une fois la requête soumise, le terminal **101** d'identification biométrique procède à la lecture à du contenu de l'élément sécurisé du terminal **104** mobile puis à l'acquisition d'une caractéristique biométrique d'épreuve de l'individu **103** à l'aide d'un dispositif d'acquisition approprié. En l'occurrence, le terminal **101** d'identification biométrique étant un terminal d'identification biométrique par reconnaissance faciale, le dispositif d'acquisition est une caméra ou un appareil photographique et la caractéristique d'épreuve est une image du visage **103a** de l'individu **103,** également appelée « empreinte faciale ».

Une fois l'empreinte faciale acquise par le dispositif d'acquisition, le terminal **101** d'identification biométrique procède à l'identification de l'individu **103** sur la base de cette empreinte. Si l'individu **103** est identifié, il est autorisé à accéder au site, à l'évènement ou au territoire. A cette fin, le terminal **101** d'identification biométrique envoie un signal de commande d'ouverture des portes **102a, 102b** au système **102** de portes **102a, 102b.** Dans le cas contraire, l'utilisateur **103** n'est pas identifié et l'accès lui est refusé. Les portes **102a, 102b** du systèmes **102** de portes **102a, 102b** restent closes. Le terminal **101** d'identification biométrique peut notifier l'utilisateur **103** de la réussite ou de l'échec de l'identification à l'aide d'un signal lumineux, un signal sonore, un message, ou leur combinaison.

Le terminal **101** d'identification biométrique tel que décrit précédemment peut être utilisé à d'autres fins, telles qu'autoriser l'accès à un ou plusieurs services à distance, autoriser un accès à des informations stockées dans une base collective ou personnelle de données, vérifier l'identité d'une ou plusieurs personnes, récupérer des identifiants de connexion, ou encore récupérer une ou plusieurs adresses de portefeuilles de monnaie électronique telle qu'une crypto-monnaie.

Selon un exemple, en référence à la **Fig. 2****,** le terminal **101** d'identification biométrique comprend un module physique **201** d'acquisition d'images, un module physique **202** de traitement de données et un boîtier **203** de protection.

Le module physique **201** d'acquisition d'images se présente sous la forme d'une caméra adaptée à l'acquisition de l'image d'un visage. Le boîtier **203** de protection comprend une fenêtre **204** transparente ou semi-transparente pour permettre l'acquisition de l'image par le module **201** d'acquisition d'images, et un écran **205** d'affichage ou interactif.

Le module physique **201** d'acquisition d'images transmet les données acquises au module physique **202** de traitement de données au moyen d'un connecteur (non représenté). Le module physique **202** de traitement de données comprend des moyens pour la mise en œuvre d'une identification biométrique. Il est chargé d'exécuter automatiquement des séquences d'opérations arithmétiques ou logiques pour réaliser des tâches ou des actions. Ce module, communément appelé ordinateur, peut comprendre une ou plusieurs unités centrales de traitement (CPU) **202a** et/ou un ou plusieurs processeurs graphiques (GPU) **202b,** un module physique **202c** de communication à distance, un ou plusieurs modules physique **202d** d'entrée / sortie pour l'échanges de données avec des dispositifs externes, un support **202e** de stockage transitoire tel qu'une mémoire vive (RAM), un support **202f** d'enregistrement non-transitoire, et des bus de communication (non représentés) pour le transfert de données entre les composants internes module **202** de traitement de données.

Le module physique **202** de traitement de données permet l'exécution d'un ou plusieurs modules de programmes comprenant des instructions qui, lorsque le ou les modules de programme sont exécutés, conduisent le module **202** de traitement de données à mettre en œuvre une identification biométrique. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Le terminal **101** d'identification biométrique tel que décrit précédemment peut être utilisé à d'autres fins, telles qu'autoriser l'accès à un ou plusieurs services à distance, autoriser un accès à des informations stockées dans une base collective ou personnelle de données, vérifier l'identité d'une ou plusieurs personnes, récupérer des identifiants de connexion, ou encore récupérer une ou plusieurs adresses de portefeuilles de monnaie électronique telle qu'une crypto-monnaie.

Le terminal **101** d'identification biométrique est configuré pour générer, selon un schéma d'encodage, un gabarit biométrique d'épreuve à partir de l'empreinte faciale d'épreuve acquise par le dispositif **201, 206** d'acquisition d'image, puis le comparer à un ou plusieurs gabarits biométriques de référence stockés dans une base de données. S'il existe une correspondance entre le gabarit biométrique d'épreuve et un gabarit biométrique de référence, l'individu **103** est identifié et est autorisé à accéder au site, à l'évènement ou au territoire. Dans le cas contraire, l'utilisateur **103** n'est pas identifié et l'accès lui est refusé.

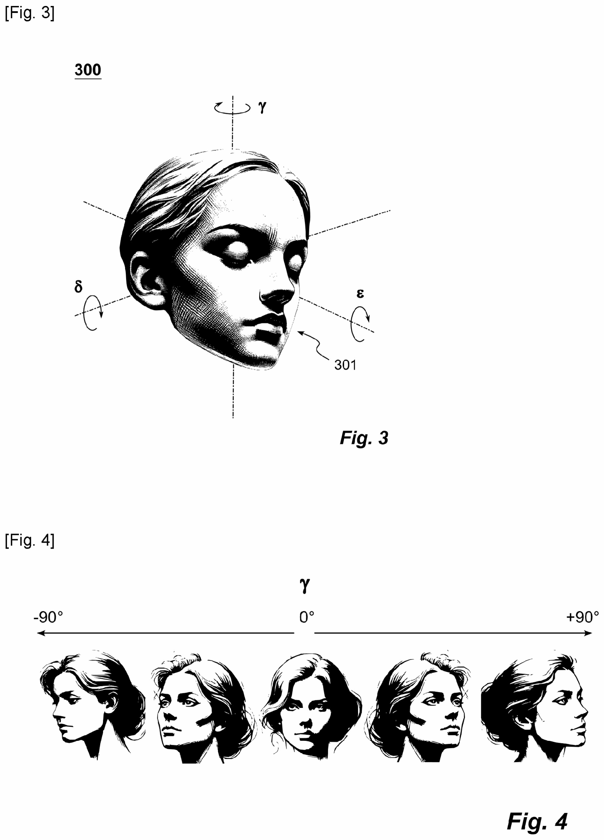

La capacité d'un traitement d'encodage à générer un gabarit biométrique fiable à partir de l'image d'un visage dépend de l'orientation, appelée « pose », du visage et de son expression faciale. En référence à la **Fig. 3****,** l'orientation du visage **301** d'un individu est liée à l'orientation de sa tête **300.** Cette orientation peut être caractérisée par trois angles : l'angle **γ** de lacet, l'angle **δ** de tangage et l'angle **ε** de roulis.

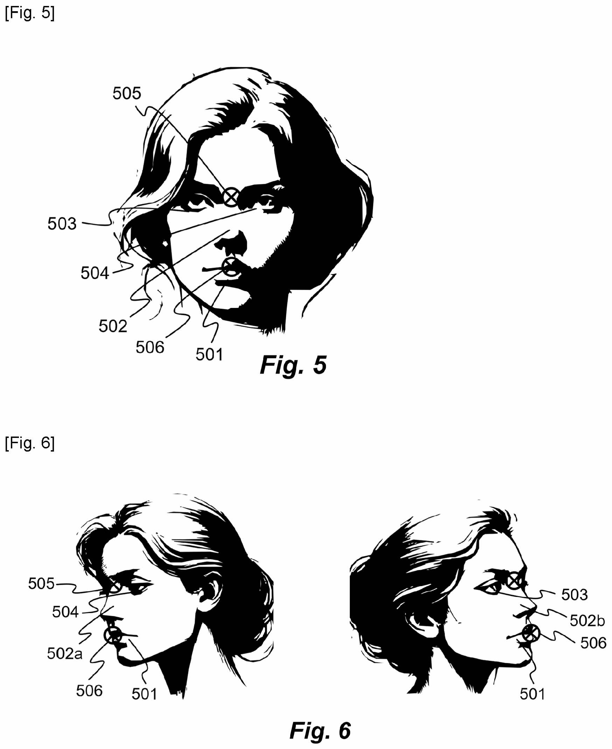

En pratique, l'angle **γ** de lacet détermine principalement le nombre et le degré de complétude des points de repère du visage, tels que les yeux, le nez et la bouche, visibles sur une image. Sur la **Fig. 4****,** sont représentés différentes orientations d'un visage, en particulier selon différentes valeurs d'angle **γ** de lacet, illustrant cette dépendance. En référence aux **Fig. 4** & **Fig. 5****,** lorsque le visage est orienté de face (*γ* = 0°), la bouche **501,** le nez **502,** l'œil gauche **503** et l'œil droit **504** sont visibles dans leur intégralité. Sur la **Fig. 4****,** un point médian **505** entre l'œil gauche **503** et l'œil droit **504,** correspondant, par exemple, à la moitié d'une distance inter-pupillaire mesurée entre ces deux yeux, et un point médian **506** de la bouche **501** sont représentés par des figurés sous la forme d'une croix entourée d'un cercle.

En référence aux **Fig. 4** & **Fig. 6****,** lorsque le visage est orienté de selon le profil droit γ~(-80°; -90°) ou le profil gauche γ~(80°; 90°), la moitié droite **501a,** resp. gauche **501b,** de la bouche **501,** l'aile droite **502a,** resp. gauche **502b,** du nez **502** et l'œil droit **504,** resp. gauche **503,** sont principalement visibles. Pour ces orientations extrêmes, donc, seul l'un des yeux **503, 504** est entièrement visible, et le nez **502** et la bouche **501** ne sont que partiellement visibles. Sur la **Fig. 6****,** un point médian **505** entre l'œil gauche **503** et l'œil droit **504,** et un point médian **506** de la bouche **501** sont représentés par des figurés sous la forme d'une croix entourée d'un cercle. Un point du bord extérieur de la bouche 501 est estimé comme représentatif d'un point médian **506** de la bouche **501,** et l'arrête extérieure du nez **501** est estime comme représentatif d'un point médian **505** entre l'œil gauche **503** et l'œil droit **504.**

En référence à la **Fig. 4****,** pour les orientations intermédiaires entre la vue de profil (γ~(±80°; ±90°)) et la vue de face (y = 0°), la visibilité des points de repère du visage varie continument.

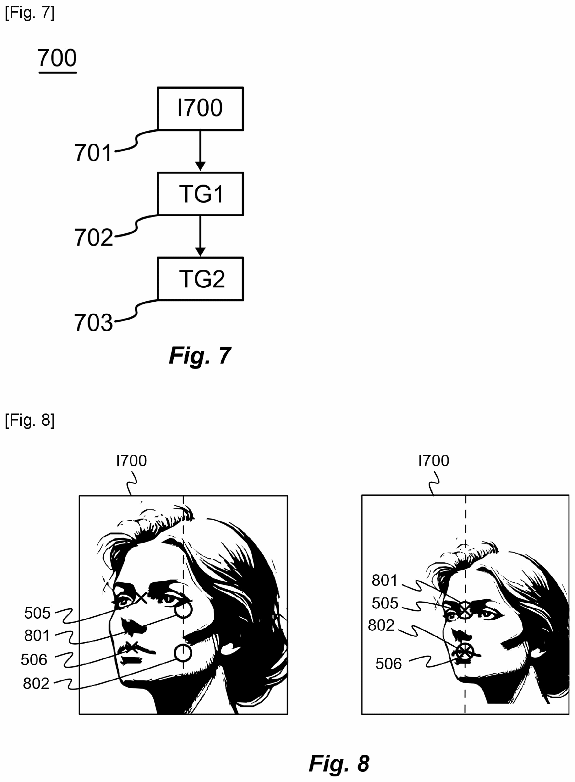

Selon un premier aspect de l'invention, en référence aux **Fig. 7, Fig. 8** et **Fig. 9****,** il est fourni un procédé **700,** mis en œuvre par un dispositif **202** de traitement de données, d'alignement d'un visage **103a, 301** d'un individu **103** dans une image **1700,** le procédé **700** comprend les étapes suivantes :
(a) Détecter **701,** dans une image **1700** du visage **103a, 301** d'un individu **103,** les positions d'un œil gauche **503,** d'un œil droit **504,** d'un point médian **505** entre l'œil droit **504** et l'œil gauche **503,** et d'un point médian **506** de la bouche **501** ;
(b) Appliquer **702** une première transformation géométrique **TG1** de sorte que les positions du point médian **505** entre l'œil gauche **503** et l'œil droit **504** et du point médian **506** de la bouche **501** et coïncident avec des points **801, 802** de référence ;
(c) Appliquer **703** une deuxième transformation géométrique **TG2** de sorte que la position de l'œil **503, 504** le plus proche dans la profondeur de l'image **1700** coïncide avec la position d'une ligne verticale **901, 902** de référence.

A l'étape **701,** les positions d'un œil gauche **503,** d'un œil droit **504,** d'un point médian **505** entre l'œil droit **504** et l'œil gauche **503,** et d'un point médian **506** de la bouche **501** peuvent être détectées à l'aide de toute méthode adaptée. Des exemples de méthodes sont décrits dans Du, H., et al. (2022). The elements of end-to-end deep face recognition: A survey of recent advances. ACM Computing Surveys (CSUR), 54(10s), 1-42.

A l'étape **702,** en référence à la **Fig. 8****,** l'application de la première transformation géométrique **TG1** a pour objectif de faire coïncider les positions du point médian **505** entre l'œil gauche **503** et l'œil droit **504** et du point médian **506** de la bouche **501** et coïncident avec des points **801, 802** de référence. Sur la **Fig. 8****,** les points de référence sont représentés par des cercles ; le point médian **505** entre l'œil gauche **503** et l'œil droit **504** et le point médian **506** de la bouche **501** sont représentés par des croix.

Les points **801, 802** de référence sont des points prédéfinis et correspondent généralement à des points particuliers d'une forme canonique ou d'un prototype **803** de visage avec lequel un encodeur est configuré pour générer un gabarit biométrique à partir d'une empreinte faciale calibré avec cette forme canonique ou ce prototype **803.** A titre d'exemple, les points **801, 802** de référence peuvent être le point médian de la bouche **804** et un point médian entre les yeux **805, 806** du prototype **803** de visage. La mise en correspondance, grâce la première transformation géométrique **TG1** appliqué sur l'ensemble de pixels de l'image **1700,** du point médian **505** entre l'œil gauche **503** et l'œil droit **504** et du point médian **506** de la bouche **501** du visage de l'image **1700** avec ces deux points de référence place les caractéristiques du visage selon des positions au sein de l'image **1700** permettant leur traitement par l'encodeur. En d'autres termes, les caractéristiques du visage sont aux positions « attendues » par l'encodeur.

De préférence, la première transformation géométrique **TG1** n'est pas mis en œuvre par un réseau de neurones artificielles. Elle est, de préférence, une transformation affine, c'est-à-dire une transformation qui préserve la colinéarité et les rapports de distance entre les points. Par exemple, elle peut être une translation, une mise à l'échelle (réduction ou agrandissement), une rotation, ou leur combinaison.

Selon certains modes de réalisation, la première transformation géométrique **TG1** est une transformation affine.

A titre d'exemple, une transformation affine dans un espace bidimensionnel peut être représentée par T=M.[x, y, 1]^{T}, où T est le vecteur transformé, M est une matrice de transformation 2x3, et [x, y, 1]^{T} est un vecteur d'entrée. La matrice M est formée d'une matrice A de dimension 2x2 A dont les paramètres de transformation linéaire sont [a₀₀, a₀₁ ; a₁₀, a₁₁], et d'un vecteur B de translation de dimension 2x1 dont les éléments [b₀₀, b₁₀]. La transformation T est l'application de la matrice M au vecteur d'entrée [x, y, 1]^{T} pour obtenir un vecteur transformé [a₀₀x + a₀₁y + b₀₀, a₁₀x + a₁₁y + b₁₀]^{T}. Elle est une combinaison d'une transformation linéaire, telle qu'une mise à l'échelle et/ou une rotation, et d'une translation dans une formulation matricielle. Le vecteur B de translation peut être nul, c'est-à-dire qu'il n'y a pas de translation. La matrice M se réduit alors à la matrice A.

L'angle, **γ,** de lacet peut être estimé à l'aide d'un réseau de neurone préalablement entrainé, ou en comparant la position du bout du nez à la droite reliant le centre des yeux au point médian de la bouche.

Les paramètres de la transformation affine peuvent être ajustés lors d'une étape préalable d'apprentissage selon une méthode de régression sur un ensemble d'images d'entraînement comprenant des images de visages selon différentes orientations. Il s'agit alors, pour chaque image, de déterminer les valeurs de paramètres afin de minimiser l'écart entre des points de référence tel que les points de référence d'un gabarit et les points médians de la bouche et des yeux. Les valeurs finales des paramètres sont celles qui minimisent cet écart pour l'ensemble des images d'entraînement. La méthode de minimisation par moindres carrés permet par exemple de trouver les paramètres de transformation (échelle, rotation et translation) qui minimisent la somme des distances au carré entre les points source et les points destination transformés correspondants.

En pratique, lors d'une opération de reconnaissance faciale, que l'individu soit statique ou en mouvement, sa tête n'est généralement pas ou sinon peu inclinée, son angle ε de roulis est sensiblement nulle. Dans le cas où elle le serait, la première transformation géométrique peut comprendre une opération préalable de rotation. L'angle de rotation varie en fonction de l'angle ε de roulis de la tête, qui varie lui-même d'un visage à l'autre ; en particulier, de préférence, l'angle de rotation a une valeur inverse à la valeur de l'angle **ε** de roulis. Lorsque la première transformation géométrique **TG1** est une transformation affine, la rotation est, de préférence, appliquée avant l'application de la transformation affine.

A l'issue de l'étape **702,** le point médian **505** entre l'œil gauche **503** et l'œil droit **504** et le point médian **506** de la bouche **501** sont alignés sur les points **801, 802** de référence. En pratique, les points **801, 802** de référence sont généralement placés dans la région médiane de l'image, souvent sur une ligne **803** médiane de l'image **I700.** Cette disposition provoque un décalage, d'autant plus important que l'angle γ de lacet s'éloigne de 0°, entre la position réelle des yeux **503, 504** et celle attendue pour ces mêmes yeux par l'encodeur afin qu'il puisse générer un gabarit biométrique à partir de l'image **I700.** En d'autres termes, à l'issue de l'étape **702,** les yeux ne sont pas placés là où ils devraient être pour que l'encodeur puisse correctement « reconnaître » et traiter les caractéristiques du visage pour générer un gabarit biométrique.

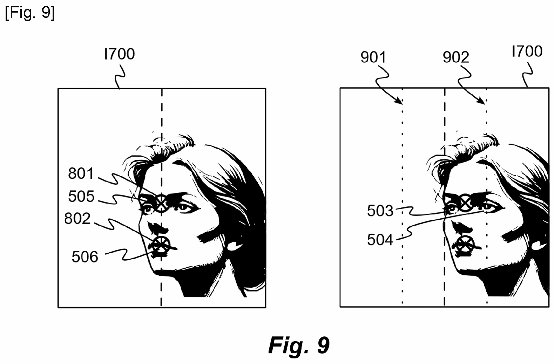

A l'étape **703,** en référence à la **Fig. 9****,** une deuxième transformation géométrique **TG2** est appliquée pour aligner l'œil le plus proche **503, 504** le plus proche dans la profondeur de l'image **I700** avec une ligne verticale **901, 902** de référence. Par « l'œil le plus proche dans la profondeur », il est entendu l'œil, entre l'œil gauche **503** et l'œil droit **504,** dont la position selon une direction virtuelle perpendiculaire à l'image est la plus proche du plan de l'image, ou encore, il est entendu l'œil gauche **503** lorsque l'angle **γ** de lacet est compris entre 0° et 90° ou l'œil **504** lorsque l'angle **γ** de lacet est compris entre 0° et -90°. Si les yeux **503, 504** sont équidistants du plan de l'image, lorsque notamment l'angle **γ** de lacet est sensiblement égal à 0°, l'œil le plus proche peut être indistinctement l'œil gauche **503** ou l'œil droit **504.**

L'œil le plus proche dans la profondeur de l'image **I700** peut être déterminé à l'aide de toute méthode adaptée. Selon certains exemples de modes de réalisation, l'œil le plus proche peut être déterminé à partir d'une estimation de l'angle **γ** de lacet ou d'une comparaison de la position du nez **502** avec celle d'une ligne entre un point médian **506** de la bouche **501** et un point médian **505** entre l'œil gauche **503** et l'œil droit **504.** Il peut également être déterminé à l'aide d'un algorithme de traitement d'image et/ou d'un dispositif d'acquisition stéréographique tel qu'une caméra stéréographique permettant d'estimer une carte de profondeur des caractéristiques du visage.

Comme illustré sur la **Fig. 9****,** la ligne verticale **901, 902** de référence peut être différence selon que l'œil le plus proche est l'œil gauche **503** ou l'œil droit **504.** Si l'œil le plus proche est l'œil gauche **503,** la ligne verticale de référence est une ligne **901** verticale située dans la moitié gauche **904** de l'image **1700.** Si l'œil le plus proche est l'œil droit **504,** la ligne verticale de référence est une ligne verticale **902** située dans la moitié droite **905** de l'image **I700.** Si les deux yeux **503, 504** sont indistinctement plus proches, la ligne verticale de référence peut être indifféremment une ligne **901** verticale située dans la moitié gauche **904** de l'image **I700** ou une ligne verticale **902** située dans la moitié droite **905** de l'image **I700.** Dans l'exemple de la **Fig. 9****,** l'œil le plus proche est l'œil droit **504,** il est alors aligné sur la ligne verticale **902** située dans la moitié droite **905** de l'image **I700**

La position de la ligne verticale **901, 902** de référence dans l'image **I700** est déterminée par les prérequis de l'encodeur susceptible d'être utilisé pour générer un gabarit biométrique à partir de l'image **I700.** En pratique, selon certains modes pratiques de réalisation, la ligne verticale **901, 902** de référence est située à une distance d'une ligne médiane **903** de l'image **I700** comprise entre zéro et un tiers de la largeur de l'image **I700.** La distance peut être exprimée en pixel ou dans unité du système métrique dès lors qu'une échelle de conversion est disponible.

Selon un exemple pratique, la distance est sensiblement égale à la moitié d'une distance inter-pupillaire de référence. La distance inter-pupillaire peut être une distance inter-pupillaire moyenne représentative d'une population d'individu. Elle peut être de 62 mm lorsqu'il est fait abstraction du genre biologique des individus. Si la population des individus dont les caractéristiques faciales sont acquises peut être caractérisée par son genre biologique, la distance inter-pullaire peut être choisie entre 51 mm et 74,5 mm pour le genre biologique féminin et choisie entre 53 mm et 77 mm pour le genre biologique masculin.

La deuxième transformation géométrique **TG2** est de tout type adapté pour placer l'œil **503, 504** le plus proche dans la profondeur de l'image **I700** sur la ligne verticale **901, 902** de référence. Selon certains modes de réalisation, la deuxième transformation géométrique **TG2** est une translation dont la norme est proportionnelle à l'angle γ de lacet. A titre d'exemple, en reprenant l'exemple précédent du vecteur B de translation de dimension 2x1, celui-ci peut alors être un vecteur de translation non nul dont la valeur du paramètre B₁₀ est proportionnelle à l'angle de **γ** de lacet.

Selon un deuxième aspect de l'invention, en référence à la **Fig. 2****,** il est fourni un dispositif ou module physique **202** de traitement de données comprenant des moyens pour la mise en œuvre d'un procédé **700** selon l'un des quelconques modes de réalisation du premier aspect de l'invention. Le dispositif ou module physique **202** de traitement de données peut être partie intégrante d'un terminal **101** d'identification biométrique ou être un élément distant, tel qu'un serveur, communiquant avec le terminal **101** d'identification via un réseau de télécommunication.

Selon un troisième aspect de l'invention, il est fourni programme d'ordinateur comprenant des instructions qui, lorsque le programme est exécuté par un dispositif ou module physique **202** de traitement de données, conduisent celui-ci à mettre en œuvre un procédé **700** selon l'un des quelconques modes de réalisation du premier aspect de l'invention. Le programme peut écrit en tout langage de programmation, compilé ou interprété. Il peut faire partie, sous la forme de module, d'une solution logicielle, c'est-à-dire d'une collection d'instructions exécutables, de codes, de scripts ou autres et/ou de bases de données de modules de programme. Quelle que soit sa forme, il est de préférence enregistré dans un support **202f** d'enregistrement non-transitoire du dispositif ou module physique **202** de traitement de données.

Selon un quatrième aspect de l'invention, il est fourni un procédé d'encodage d'une image **I700** d'un visage **103a, 301** d'un individu **103,** le procédé comprend les étapes suivantes :
- Acquérir une image **I700** du visage **103a, 301** d'un individu **103** ;
- Aligner le visage **103a, 301** de l'individu **103** à l'aide d'un procédé **700** d'alignement selon l'un des quelconques modes de réalisation du premier aspect de l'invention ;
- Encoder l'image du visage aligné en un gabarit biométrique à l'aide d'un schéma d'encodage.

Tous types de schéma d'encodage peuvent être utilisés pour encoder l'image aligné du visage en un gabarit biométrique. Des exemples de schéma pu méthode d'encodage sont décrits dans Du, H., et al. (2022). The elements of end-to-end deep face recognition: A survey of recent advances. ACM Computing Surveys (CSUR), 54(10s), 1-42.

Selon un cinquième aspect de l'invention, il est fourni un terminal **101** d'identification par reconnaissance faciale comprenant :
- un dispositif **201** d'acquisition d'une image **I700** du visage d'un individu **103** ;
- un dispositif **202** de traitement de données configuré pour l'exécution d'un procédé **700** d'alignement selon l'un des quelconques modes de réalisation du premier aspect de l'invention.

### Références

### Littérature brevet

EP 2 031 544 A1 SONY CORP [JP] 04.03.2009.

US 2023/102702 A1 SHIN JAESEOB [KR] 30.03.2023.

US 2009/060290 A1 SABE KOHTARO [JP] 05.03.2009.

### Littérature non-brevet

Chai, X., et al. (2003). Pose normalization for robust face recognition based on statistical affine transformation. In Fourth International Conference on Information, Communications and Signal Processing, 2003 and the Fourth Pacific Rim Conference on Multimedia. Proceedings of the 2003 Joint (Vol. 3, pp. 1413-1417). IEEE.

Tuzel, O. et al. (2016). Robust face alignment using a mixture of invariant experts. In Computer Vision-ECCV 2016: 14th European Conference, Amsterdam, The Netherlands, October 11-14, 2016, Proceedings, Part V 14 (pp. 825-841). Springer International Publishing.

Du, H., et al. (2022). The elements of end-to-end deep face recognition: A survey of recent advances. ACM Computing Surveys (CSUR), 54(10s), 1-42.

## Revendications

1. Procédé, **(700),** mis en œuvre par un dispositif **(202)** de traitement de données, d'alignement d'un visage **(103a, 301)** d'un individu **(103)** dans une image **(I700),** le procédé **(700)** comprend les étapes suivantes :
(a) Détecter **(701),** dans une image **(I700)** du visage **(103a, 301)** d'un individu **(103),** les positions d'un œil gauche **(503),** d'un œil droit **(504),** d'un point médian **(505)** entre l'œil droit **(504)** et l'œil gauche **(503),** et d'un point médian **(506)** de la bouche **(501)** ;
(b) Appliquer **(702)** une première transformation géométrique **(TG1)** de sorte que les positions du point médian **(505)** entre l'œil gauche **(503)** et l'œil droit **(504)** et du point médian **(506)** de la bouche **(501)** et coïncident avec des points **(801, 802)** de référence ;
et se **caractérise par** l'étape suivante:
(c) Appliquer **(703)** une deuxième transformation géométrique **(TG2)** de sorte que la position de l'œil **(503, 504)** le plus proche dans la profondeur de l'image **(I700)** coïncide avec la position d'une ligne verticale **(901, 902)** de référence.

2. Procédé selon la revendication 1, tel que la première transformation géométrique **(TG1)** est une transformation affine.

3. Procédé selon l'une quelconque des revendications 1 à 2, tel que la deuxième transformation géométrique **(TG2)** est une translation dont la norme est proportionnelle à l'angle **γ,** de lacet.

4. Procédé selon l'une quelconque des revendications 1 à 3, tel que les paramètres de la première transformation géométrique **(TG1)** et/ou de la deuxième transformation géométrique **(TG2)** sont ajustés lors d'une étape préalable d'apprentissage selon une méthode de régression sur un ensemble d'images d'entraînement comprenant des images de visages selon différentes orientations.

5. Procédé selon l'une quelconque des revendications 1 à 4, tel la ligne verticale **(901, 902)** de référence est située à une distance d'une ligne médiane **(903)** de l'image **(I700)** comprise entre zéro et un tiers de la largeur de l'image **(I700).**

6. Procédé selon l'une quelconque des revendications 1 à 5, tel que l'œil le plus proche peut être déterminé à partir d'une estimation de l'angle **γ** de lacet ou d'une comparaison de la position du nez **(502)** avec celle d'une ligne entre un point médian **(506)** de la bouche **(501)** et un point médian **(505)** entre l'œil gauche **(503)** et l'œil droit **(504).**

7. Dispositif **(202)** de traitement de données comprenant des moyens pour la mise en œuvre d'un procédé **(700)** selon l'une quelconque des revendications 1 à 6.

8. Programme d'ordinateur comprenant des instructions qui, lorsque le programme est exécuté par un dispositif **(202)** de traitement de données, conduisent celui-ci à mettre en œuvre un procédé **(700)** selon l'une quelconque des revendications 1 à 6.

9. Procédé d'encodage d'une image **(I700)** d'un visage **(103a, 301)** d'un individu **(103),** le procédé comprend les étapes suivantes :
- Acquérir une image **(I700)** du visage **(103a, 301)** d'un individu **(103)** ;
- Aligner le visage **(103a, 301)** de l'individu **(103)** à l'aide d'un procédé **(700)** d'alignement selon l'une quelconque des revendications 1 à 6 ;
- Encoder l'image du visage aligné en un gabarit biométrique à l'aide d'un schéma d'encodage.

10. Terminal **(101)** d'identification par reconnaissance faciale comprenant :
- un dispositif **(201)** d'acquisition d'une image du visage d'un individu ;
- un dispositif **(202)** de traitement de données selon la revendication 7.

## Patentansprüche

1. Verfahren (**700**), das von einer Datenverarbeitungsvorrichtung (**202**) ausgeführt wird, zum Ausrichten eines Gesichts (**103a**, **301**) einer Person (**103**) in einem Bild (**I700**), wobei das Verfahren (**700**) die folgenden Schritte umfasst:
(a) Erfassen (**701**) in einem Bild (**I700**) des Gesichts (**103a**, **301**) einer Person (**103**) die Positionen eines linken Auges (**503**), eines rechten Auges (**504**), eines Mittelpunkts (**505**) zwischen dem rechten Auge (**504**) und dem linken Auge (**503**) sowie eines Mittelpunkts (**506**) des Mundes (**501**);
(b) Anwenden (**702**) einer ersten geometrischen Transformation (**TG1**), sodass die Positionen des Mittelpunkts (**505**) zwischen dem linken Auge (**503**) und dem rechten Auge (**504**) sowie des Mittelpunkts (**506**) des Mundes (**501**) mit Referenzpunkten (**801**, **802**) zusammenfallen;
(c) Anwenden (**703**) einer zweiten geometrischen Transformation (**TG2**), so dass die Position des näheren Auges (**503**, **504**) in der Tiefe des Bildes (**I700**) mit der Position einer vertikalen Referenzlinie (**901**, **902**) zusammenfällt.

2. Verfahren nach Anspruch 2, wobei die erste geometrische Transformation (**TG1**) eine affine Transformation ist.

3. Verfahren nach einem der Ansprüche 1 und 2, wobei die zweite geometrische Transformation (**TG2**) eine Translation ist, deren Norm proportional zum Gierwinkel **γ** ist.

4. Verfahren nach einem der Ansprüche 1 bis 3, wobei die Parameter der ersten geometrischen Transformation (**TG1**) und/oder der zweiten geometrischen Transformation (**TG2**) in einem vorangehenden Lernschritt unter Verwendung eines Regressionsverfahrens angepasst werden, das auf einen Satz von Trainingsbildern angewendet wird, der Bilder von Gesichtern in verschiedenen Posen umfasst.

5. Verfahren nach einem der Ansprüche 1 bis 4, wobei die vertikale Referenzlinie (**901**, **902**) in einem Abstand von einer Mittellinie (**903**) des Bildes (**I700**) liegt, der zwischen null und einem Drittel der Breite des Bildes (**I700**) beträgt.

6. Verfahren nach einem der Ansprüche 1 bis 5, wobei das nächstgelegene Auge auf der Grundlage einer Schätzung des Gierwinkels **γ** oder eines Vergleichs der Position der Nase (**502**) mit der Position einer Linie zwischen einem Mittelpunkt (**506**) des Mundes (**501**) und einem Mittelpunkt (**505**) zwischen dem linken Auge (**503**) und dem rechten Auge (**504**) bestimmt werden.

7. Datenverarbeitungsvorrichtung (**202**) mit Mitteln zur Durchführung eines Verfahrens (**700**) gemäß einem der Ansprüche 1 bis 6.

8. Computerprogramm, das Anweisungen umfasst, die, wenn das Programm von einer Datenverarbeitungsvorrichtung (**202**) ausgeführt wird, diese veranlassen, ein Verfahren (**700**) gemäß einem der Ansprüche 1 bis 6 durchzuführen.

9. Verfahren zum Kodieren eines Bildes (**I700**) eines Gesichts (**103a**, **301**) einer Person (**103**), wobei das Verfahren die folgenden Schritte umfasst:
- Erfassen eines Bildes (**I700**) des Gesichts (**103a**, **301**) einer Person (**103**);
- Ausrichten des Gesichts (**103a**, **301**) der Person (**103**) unter Verwendung eines Ausrichtungsverfahrens (**700**) gemäß einem der Ansprüche 1 bis 6;
- Kodieren des Bildes des ausgerichteten Gesichts in eine biometrische Vorlage unter Verwendung eines Kodierungsschemas.

10. Endgerät (**101**), das eine Identifizierung durch Gesichtserkennung ermöglicht, mit:
- eine Vorrichtung (**201**) zum Erfassen eines Bildes des Gesichts einer Person;
- eine Datenverarbeitungsvorrichtung (**202**) gemäß Anspruch 7.

## Claims

1. Method (**700**), implemented by a data-processing device (**202**), for aligning a face (**103a**, **301**) of an individual (**103**) in an image (**I700**), the method (**700**) comprising the following steps:
(a) detecting (**701**), in an image (**I700**) of the face (**103a**, **301**) of an individual (**103**), the positions of a left eye (**503**), of a right eye (**504**), of a midpoint (**505**) between the right eye (**504**) and left eye (**503**), and of a midpoint (**506**) of the mouth (**501**);
(b) applying (**702**) a first geometric transformation (**TG1**) so that the positions of the midpoint (**505**) between the left eye (**503**) and right eye (**504**) and of the midpoint (**506**) of the mouth (**501**) coincide with reference points (**801**, **802**);
(c) applying (**703**) a second geometric transformation (**TG2**) so that the position of the closest eye (**503**, **504**) in the depth of the image (**I700**) coincides with the position of a vertical reference line (**901**, **902**).

2. Method according to Claim 2, wherein the first geometric transformation (**TG1**) is an affine transformation.

3. Method according to either of Claims 1 and 2, wherein the second geometric transformation (**TG2**) is a translation the norm of which is proportional to the yaw angle **γ**.

4. Method according to any of Claims 1 to 3, wherein the parameters of the first geometric transformation (**TG1**) and/or of the second geometric transformation (**TG2**) are adjusted in a prior learning step using a regression method applied to a set of training images comprising images of faces with various poses.

5. Method according to any of Claims 1 to 4, wherein the vertical reference line (**901**, **902**) is located at a distance from a center line (**903**) of the image (**I700**) of between zero and one third of the width of the image (**I700**).

6. Method according to any of Claims 1 to 5, wherein the nearest eye may be determined based on an estimate of the yaw angle **γ** or on a comparison of the position of the nose (**502**) with the position of a line between a midpoint (**506**) of the mouth (**501**) and a midpoint (**505**) between the left eye (**503**) and the right eye (**504**).

7. Data-processing device (**202**) comprising means for implementing a method (**700**) according to any of Claims 1 to 6.

8. Computer program comprising instructions that, when the program is executed by a data-processing device (**202**), cause the latter to implement a method (**700**) according to any of Claims 1 to 6.

9. Method for encoding an image (**I700**) of a face (**103a**, **301**) of an individual (**103**), the method comprising the following steps:
- acquiring an image (**I700**) of the face (**103a**, **301**) of an individual (**103**);
- aligning the face (**103a**, **301**) of the individual (**103**) using an aligning method (**700**) as claimed in any of claims 1 to 6;
- encoding the image of the aligned face into a biometric template using an encoding scheme.

10. Terminal (**101**) enabling identification through facial recognition, comprising:
- a device (**201**) for acquiring an image of the face of an individual;
- a data-processing device (**202**) according to Claim 7.
